# EUROPÄISCHE PATENTSCHRIFT

(11) **EP 4 097 365 B1**
(45) Veröffentlichungstag und Bekanntmachung des Hinweises auf die Patenterteilung: **13.12.2023**
(21) Anmeldenummer: 21703843.9
(22) Anmeldetag: 27.01.2021
(51) Int. Cl.: F16C 7/06

(54) **ZUG-DRUCK-STANGE**
PUSH/PULL ROD
TIGE DE POUSSÉE/TRACTION

(30) Priorität: 27.01.2020 DE 202020100426 U
(43) Veröffentlichungstag der Anmeldung: 07.12.2022
(73) Patentinhaber: Schwarz GmbH, 75382 Althengstett (DE)
(72) Erfinder: HOMNER, Bernhard, 75365 Calw (DE)
(74) Vertreter: Puschmann Borchert Kaiser Klettner Patentanwälte Partnerschaft mbB
(86) Internationale Anmeldenummer: PCT/EP2021/051841
(87) Internationale Veröffentlichungsnummer: WO 2021/151931

(56) Entgegenhaltungen:
- EP-A1- 2 320 100
- WO-A1-2013/164243
- DE-B3-102011 053 063

## Beschreibung

Die Erfindung betrifft eine Zug-Druck-Stange gemäß der im Oberbegriff des Anspruches 1 angegebenen Art.

Zug-Druck-Stangen können beispielsweise als Hängevorrichtung, insbesondere zum Abhängen von Bauelementen, aber auch zum seitlichen Befestigen oder Abstützen von unten von Gepäckboxen, Schrankelementen oder sonstiger Innenausstattung, auch in einem Fahrzeug oder einem Flugzeug, dienen. Diese Zug-Druck-Stangen weisen zwei Befestigungselemente auf, die über einen Schaft mit einem Anschlussstück, das eine Gewindeanordnung hat, verbunden sind. Dabei ist das eine Befestigungselement über ein Linksgewinde und das andere Befestigungselement über ein Rechtsgewinde mit dem Anschlussstück verbunden, sodass durch Drehung des Anschlussstücks gegen die beiden Befestigungselemente die Gesamtlänge der Zug-Druck-Stange variiert werden kann. Durch eine solch einstellbare Ausgestaltung der Länge der Zug-Druck-Stange können beispielsweise unterschiedliche Deckenhöhen eines Flugzeugs oder anderer Fahrzeuge ausgeglichen werden, damit die Gepäckboxen oder sonstige aufzuhängende Elemente in einer horizontalen Ebene ausgerichtet hängen.

Um sicherzustellen, dass sich die gewählte Länge der Zug-Druck-Stange nach der Einstellung nicht ändert, ist eine Verdrehsicherung vorgesehen. Hierfür wirkt der Schaft der Befestigungselemente jeweils mit federbelasteten Rastelementen zusammen. Über die Feder wird eine ausreichende Federkraft erzeugt, die verhindert, dass die Rastelemente sich ungewollt zueinander verdrehen und somit eine unerwünschte Längenänderung der Zug-Druck-Stange herbeiführen.

Eine derartige Zug-Druck-Stange ist aus der EP 2 320 100 B1 bekannt. Diese Zug-Druck-Stange umfasst dabei zwei Befestigungsvorrichtungen, die in ein Anschlussstück mit in Axialrichtung voneinander distanzierten Stirnenden mit einem Schaft eingreifen. Beide Anschlussstücke sind miteinander verbunden. Die Befestigungsvorrichtung ist zur Längenveränderung der Zug-Druck-Stange jeweils über eine Gewindeanordnung drehbar mit dem Anschlussstück verbunden. Zudem ist eine Rastvorrichtung mit in axialer Richtung gesehen jeweils einander zugewandten sowie zusammenwirkenden ersten und zweiten Rastelementen in einem Anschlussstück vorgesehen, welche mittels eines Federelements aneinandergedrückt sind. Das erste Rastelement der Rastvorrichtung ist dabei drehfest mit dem Anschlussstück verbunden und das zweite Rastelement ist drehfest an der Befestigungsvorrichtung angeordnet. Das Federelement stützt sich mit seinem ersten Ende an einer am Anschlussstück ausgebildeten Stützschulter und mit seinem zweiten Ende am zweiten Rastelement ab. Die relative Drehbewegung der Befestigungsvorrichtung bezüglich des Anschlussstücks wird durch die Rastelemente in einer Mehrzahl von Drehstellungen mit einer durch die Federkraft vorbestimmten Verriegelungskraft lösbar arretiert.

Bei dieser Konstruktion ergibt sich jedoch der erhebliche Nachteil, dass das Federelement, je nach Ausfahrstellung der Befestigungsvorrichtung, eine unterschiedliche Federkraft für die Verdrehsicherung der Rastvorrichtung erzeugt. Werden die Befestigungsvorrichtungen gegeneinander über die Gewindeanordnung gegenüber dem zugeordneten Anschlussstück verdreht, bewegen sich die Befestigungsvorrichtungen voneinander weg und die Federkraft des Federelements für die Verdrehsicherung der Rastvorrichtung wird schwächer. Bewegen sich die Befestigungsvorrichtungen aufeinander zu, erhöht sich die Federkraft des Federelements für die Verdrehsicherung der Rastvorrichtung. Zudem ergibt sich der Nachteil, dass bei einer Demontage die Rastvorrichtung mit dem Federelement auseinanderfällt.

Diesen Nachteil löst die Zug-Druck-Stange, wie sie aus der WO 2013/164243 A1 bekannt ist. Das erste Anschlussstück umfasst dabei einen Grundkörper und eine die beiden Halteelemente sowie das Federelement bereichsweise umgreifende Hülse. Die Hülse ist mit dem Grundkörper verbunden, wobei die Hülse einen Innendurchmesser aufweist, der eine Relativbewegung der Halteelemente zueinander und des Federelements gewährleistet. Die Hülse ist gegenüber dem Grundkörper in axialer Richtung fixiert. Das erste Anschlussstück hält die Haltevorrichtung mit dem Federelement in beiden axialen Richtungen. Dabei ist die Haltevorrichtung als Rastvorrichtung mit einem ersten Rastelement und einem zweiten Rastelement ausgebildet. Das zweite Rastelement weist mehrere Rastnasen auf, welche in Rastnuten des ersten Rastelements eingreifen. Das erste Rastelement weist ebenfalls mehrere Rastnasen auf, welche in Rastnuten des zweiten Rastelements eingreifen. Wird die erste Befestigungsvorrichtung in das erste Anschlussstück hinein oder aus diesem heraus gedreht, gleiten die Rastnasen der Rastvorrichtung gegen die Federkraft aneinander, wobei sich ein Rastelement gegen die Federkraft in axialer Richtung bewegt. Ein Rastelement bewegt sich gegenüber dem anderen Rastelement, bis die jeweils vorhandenen Rastnasen in benachbarte Rastnuten eingreifen. Die für das Verdrehen des ersten Rastelements gegenüber dem zweiten Rastelement aufzubringende Maximalkraft ist dabei für jede Bewegung der einen Rastnasen über die anderen Rastnasen gleich. In der Verdrehsicherung, also wenn die Rastnasen in die Rastnuten eingreifen, ist die Federkraft des Federelements ebenfalls immer gleich, unabhängig von der Verfahrstellung der ersten Befestigungsvorrichtung gegenüber dem ersten Anschlussstück.

Nachteilig ist die aufwändige, kostspielige mehrteilige Konstruktion, bei der sich im Betrieb die Hülse lösen kann.

Der Erfindung liegt daher die Aufgabe zugrunde, eine Zug-Druck-Stange gemäß der im Oberbegriff des Anspruches 1 angegebenen Art derart weiterzubilden, dass unter Vermeidung der genannten Nachteile die Federkraft des Federelements für die Verdrehsicherung der Haltevorrichtung unabhängig von der relativen Position der Befestigungsvorrichtung zu dem zugeordneten Anschlussstück immer konstant bleibt.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch Vorsehen von Rastnasen unmittelbar auf dem Federelement sich auf einfache Weise eine direktere Kraftübertragung und somit Einstellbarkeit der Federkraft ergibt.

Nach der Erfindung ist beim zweiten Rastelement zumindest eine Rastnase unmittelbar auf einem Federelement fest angeordnet. Auf einfache Weise wird erreicht, dass die jeweilige Federkraft gegenüber dem ersten Anschlussstück konstant bleibt und einfacher eingestellt werden kann. Zudem ist durch diese Ausführung eine einfache Montage möglich, wodurch sich die Kosten reduzieren lassen. Ein Lösen von einzelnen Teilen wird ebenso verhindert wie Fehlfunktionen.

Gemäß einer Ausführungsform der Erfindung ist die Hülse mit dem Federelement oder mit mehreren Federelementen fest verbunden. Dies vereinfacht die Montage.

Insbesondere bilden die Hülse, das Federelement und die Rastnasen des zweiten Rastelements eine Baueinheit, die beispielsweise einstückig ausgebildet ist. Der Montageaufwand wird dadurch erheblich verkleinert.

Um diese Baueinheit möglichst leichtgewichtig auszubilden und einfach herstellen zu können, kann diese aus Kunststoff bestehen.

Dabei können die Federelemente als Federarme ausgebildet sein, welche von der Innenwandung der Hülse nach innen auskragen und zumindest eine Rastnase tragen. Eine einfache Herstellung wird hierdurch gewährleistet.

Gemäß einer Ausführungsform der Erfindung weist der Schaft des ersten Befestigungselements eine Nut auf. Die Hülse ist dabei zumindest mit einem, insbesondere radial, nach innen gerichteten, in die Nut des Schafts eingreifenden Vorsprung versehen, der im Zusammenwirken mit der Nut als Drehsicherung der Hülse und des mit der Hülse verbundenen zweiten Halteelements gegenüber dem Schaft dient. Dabei kann die Nut parallel zur Längsachse des Schafts verlaufen und zumindest so lang ausgebildet sein wie der maximale Hub, welcher über die Gewindeanordnung zwischen erster Befestigungsvorrichtung und erstem Anschlussstück ermöglich wird.

Gemäß einer Ausführungsform der Erfindung umgreift die Hülse den Schaft der ersten Befestigungsvorrichtung, wobei der Schaft in dem Grundkörper über die Gewindeanordnung und über die Haltevorrichtung drehbar fixiert ist.

Je nach Anforderungsprofil können der Grundkörper und die Hülse lösbar oder unlösbar miteinander verbunden sein.

Insbesondere bei einer lösbaren Verbindung von Grundkörper und Hülse erweist es sich als günstig, dass der Grundkörper und die Hülse über eine Schnappverbindung miteinander verbunden sind. Eine einfache Montage wird hierdurch gewährleistet.

Um weitere konstruktive Gestaltungsmöglichkeiten zu schaffen, ist es günstig, wenn die Hülse auf dem Grundkörper drehbar gelagert ist.

Vorzugsweise weist der Schaft am Außenumfang und um diesen herum verlaufend eine Nut auf, in welche die Hülse eingreift.

Vorzugsweise sind eine zweite Befestigungsvorrichtung mit Schaft und ein zweites Anschlussstück vorgesehen, um auf beiden Seiten der Zug-Druck-Stange entsprechende Befestigungen vorzusehen und diese auch bei Bedarf austauschen zu können.

Dabei können die beiden Anschlussstücke über eine Verbindungsstange miteinander verbunden sein.

Gemäß einer Ausführungsform der Erfindung sind das erste und das zweite Anschlussstück unterschiedlich ausgebildet und nur das erste Anschlussstück ist mit der Haltevorrichtung versehen.

Dabei können das erste und zweite Anschlussstück in eine Verbindungsstange eingebracht und mit dieser fest verbunden sein, insbesondere mit dieser verschraubt und/oder verklebt sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Seitenansicht auf eine Ausführungsform einer Zug-Druck-Stange im ausgefahrenen Zustand nach dem Stand der Technik;
- Fig. 2: eine Seitenansicht auf die Zug-Druck-Stange von Fig. 1 im eingefahrenen Zustand;
- Fig. 3: eine Explosionsseitenansicht der Zug-Druck-Stange von Fig. 1;
- Fig. 4: eine Explosionsseitenansicht einer Verbindungstange mit erstem und zweitem Anschlussstück der Zug-Druck-Stange von Fig. 1 gemäß einer ersten Ausführungsform, wobei das erste Anschlussstück ohne Hülse, Federelement und zweitem Rastelement gezeigt ist;
- Fig. 5a: eine perspektivische Detailansicht auf eine erste Befestigungsvorrichtung der Zug-Druck-Stange von Fig. 1, in welche das erste Anschlussstück eingebracht ist mit versetzten zueinander ersten und zweiten Rastelementen während des Drehens, wobei die die Rastvorrichtung umgreifende Hülse und das Federelement nicht gezeigt sind;
- Fig. 5b: eine perspektivische Detailansicht auf die erste Befestigungsvorrichtung von Fig. 5a, wenn die zwei Rastelemente ineinandergreifen;
- Fig. 6: eine perspektivische Explosionsansicht auf den vorderen Bereich des ersten Anschlussstücks;
- Fig. 7: eine perspektivische Ansicht auf den vorderen Bereich des ersten Anschlussstücks mit geschnittener Hülse;
- Fig. 8: eine perspektivische Explosionsansicht auf den vorderen Bereich eines ersten Anschlussstücks und einer ersten Befestigungsvorrichtung gemäß einer Ausführungsform der Erfindung;
- Fig. 9: eine perspektivische Ansicht auf die Hülse des Anschlussstücks von Fig. 8;
- Fig. 10: eine Querschnittsansicht auf die Hülse von Fig. 9;
- Fig. 11: eine Schnittansicht auf den vorderen Bereich des ersten Anschlussstücks mit der Befestigungsvorrichtung im montierten Zustand von Fig. 8;
- Fig. 12: eine perspektivische Ansicht von schräg vorne auf die Befestigungsvorrichtung mit Anschlussstück von Fig. 11, und
- Fig. 13: eine Vorderansicht von Fig. 12.

Für die im Folgenden beschriebenen Ausführungsformen werden für gleiche Teile gleiche Bezugszeichen bzw. gleiche Bauteilbezeichnungen verwendet, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

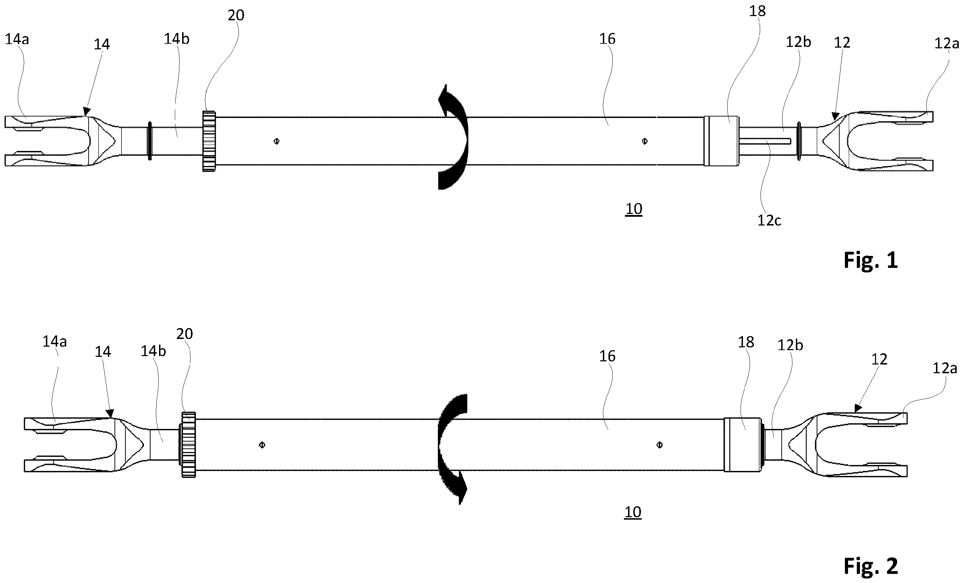

In den Fig. 1 bis 7 ist eine Ausführungsform einer Zug-Druck-Stange 10 dargestellt, welche in modulartiger Bauweise ausgebildet ist und an einem Ende eine erste Befestigungsvorrichtung 12 und an dem zweiten, in Axialrichtung entfernt gelegenen Ende eine zweite Befestigungsvorrichtung 14 aufweist, wobei die Zug-Druck-Stange 10 weiterhin eine zwischen diesen Befestigungsvorrichtungen 12, 14 angeordnete Verbindungsstange 16 mit einem ersten Anschlussstück 18 auf einer ersten Seite, einem zweiten Anschlussstück 20 auf einer zweiten Seite sowie zumindest eine in dem ersten Anschlussstück 18 angeordnete Rastvorrichtung 22 umfasst.

In dem in den Fig. 1 bis 7 gezeigten Ausführungsbeispiel weist die Zug-Druck-Stange 10 beidseits die in Axialrichtung voneinander beabstandeten Befestigungsvorrichtungen 12 und 14 auf, wobei hier beide Befestigungsvorrichtungen jeweils ein Kupplungselement 12a, 14a sowie einen daran angeordneten Schaft 12b, 14b umfassen.

Die Rastvorrichtung 22 ist in dem ersten Anschlussstück 18 vorgesehen, um eine relative Drehbewegung der ersten Befestigungsvorrichtung 12 gegenüber dem ersten Anschlussstück 18 nach der Justierung der Gesamtlänge der Zug-Druck-Stange 10 zu verhindern. Dazu weist die Rastvorrichtung 22 in axialer Richtung gesehen jeweils einander zugewandte sowie zusammenwirkende Rastelemente 24, 26 auf, welche mittels eines Federelementes 28 aneinander bzw. gegeneinander gedrückt sind. Beidseits des Federelements 28 können noch Distanz- bzw. Druckscheiben angeordnet sein, um einen direkten Kontakt zwischen dem Federelement 28 und dem ersten Anschlussstück 18 zu vermeiden. Eine solche Druckscheibe kann aus einem Edelstahlmaterial hergestellt sein, um die Reibung zwischen dem Federelement 28 und dem ersten Anschlussstück 18 zu minimieren.

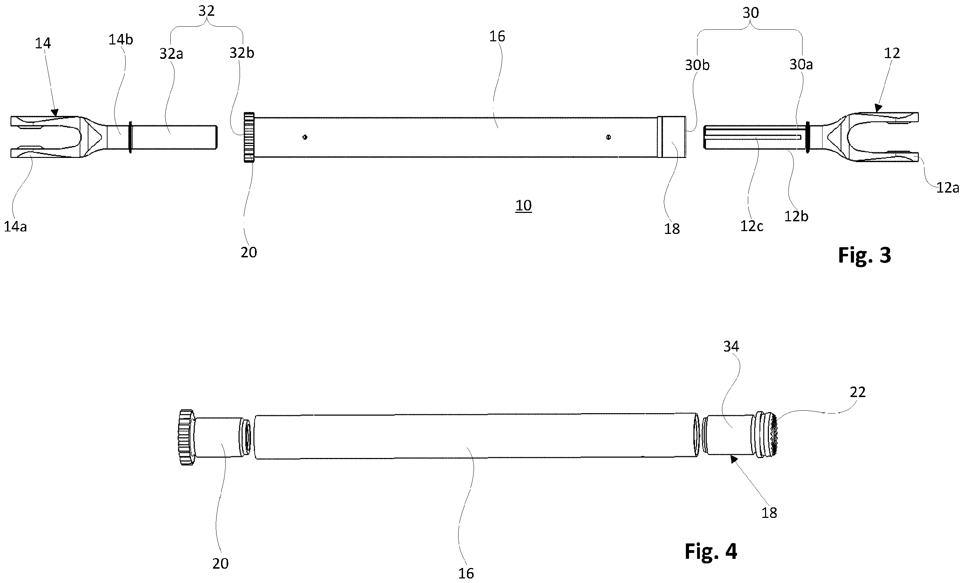

Zudem ist zwischen der ersten Befestigungsvorrichtung 12, insbesondere deren Schaft 12b, und dem ersten Anschlussstück 18 eine erste Gewindeanordnung 30 vorgesehen. Eine weitere Gewindeanordnung 32 ist zwischen dem Schaft 14b der zweiten Befestigungsvorrichtung 14 und dem zweiten Anschlussstück 20 vorgesehen, siehe Fig. 3. Um eine relative gegenläufige Verstellung der beiden Befestigungsvorrichtungen 12 und 14 gegenüber dem jeweils zugeordneten Anschlussstück 18 oder 20 zu erreichen, wird eine der beiden Gewindeanordnungen 30 des ersten Anschlussstücks 18 oder 32 des zweiten Anschlussstücks 20 zur Verbindung mit der zugeordneten Befestigungsvorrichtung 12, 14 als Rechtsgewinde und die andere Gewindeanordnung 30 oder 32 als Linksgewinde ausgebildet. Durch die zueinander gegenläufig ausgebildeten Gewindeanordnungen 30 und 32 bei einer gekuppelten Stellung der beiden Befestigungsvorrichtungen 12, 14 relativ gegenüber hier nicht näher dargestellten Bauteilen kann dann über Verdrehen der fest mit den Anschlussstücken 18, 20 verbundenen Verbindungsstange 16 relativ gegenüber den beiden Befestigungsvorrichtungen 12, 14 die Länge der gesamten Zug-Druck-Stange 10 einfach verändert werden.

Die Gewindeanordnungen 30 und 32 sind mit einer gegenläufigen Steigung ausgebildet. So kann eine stufenlose Verstellung des Abstandes zwischen den Enden der Befestigungsvorrichtungen 12, 14 erfolgen. Da die Befestigungsvorrichtungen 12, 14 an den abzustützenden Bauteilen über das jeweilige Kupplungselement 12a, 14a gekuppelt sind, sind diese drehfest gegenüber dem zugeordneten Anschlussstücks 12, 14 gehalten. Durch die Verdrehung der Verbindungsstange 16 gegenüber den Befestigungsvorrichtungen 12, 14 erfolgt eine gewisse Verspannung zwischen diesen Teilen über die Gewindeanordnungen 30, 32. Zur Erleichterung der manuellen Einleitung der Drehbewegung auf die Verbindungsstange 16 kann dessen Oberfläche griffig ausgeführt sein.

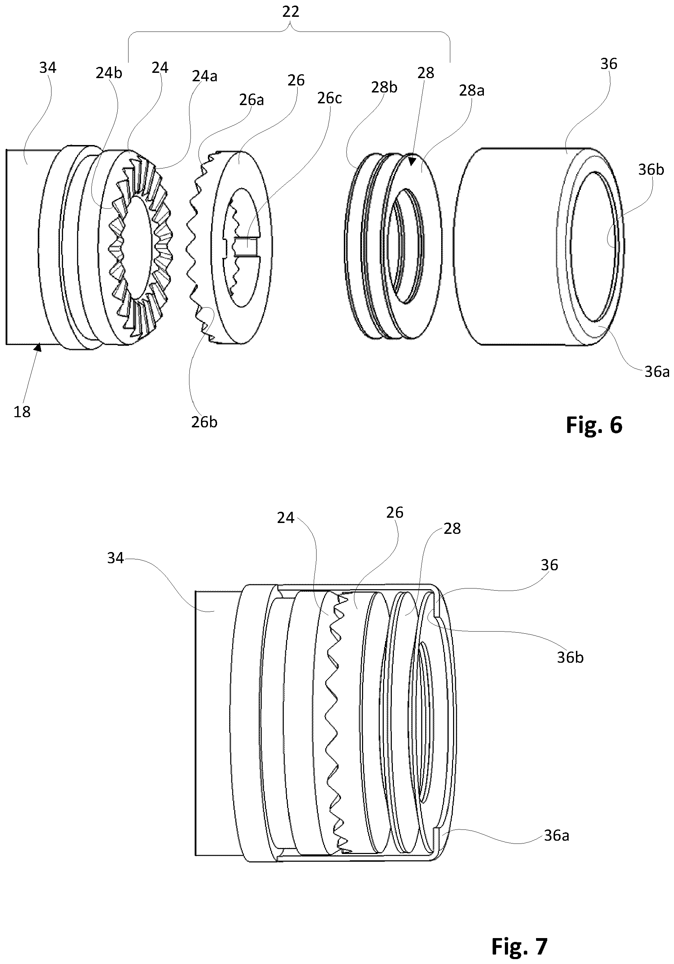

Das erste Rastelement 24 der Rastvorrichtung 22 ist fest mit dem ersten Anschlussstück 18 verbunden, siehe Fig. 6. Das erste Anschlussstück 18 ist ebenso wie das zweite Anschlussstück 20 in das Verbindungsrohr 16 eingebracht und mit diesem verschraubt und/oder verklebt. Das erste Rastelement 24, das erste Anschlussstück 18, das Verbindungsrohr 16 und das zweite Anschlussstück 20 bilden somit eine Baueinheit. In das zweite Anschlussstück 20 ist die zweite Befestigungsvorrichtung 14 über die zweite Gewindeanordnung 32a, 32b eingeschraubt.

Dabei ist das Gewinde 30a des Schaftes 12b als Außengewinde und das Gewinde 30b des ersten Anschlussstücks 18 als Innengewinde ausgebildet. Das Gewinde 32a des Schaftes 14b ist ebenso als Außengewinde und das Gewinde 32b als Innengewinde ausgebildet. Eines der beiden Gewinde 30b des ersten Anschlussstücks 18 und des Gewindes 32b des zweiten Anschlussstücks 20 ist zur Verbindung mit der jeweiligen Befestigungsvorrichtung 12, 14 als Rechtsgewinde und das andere Gewinde 30b, 32b als Linksgewinde ausgebildet.

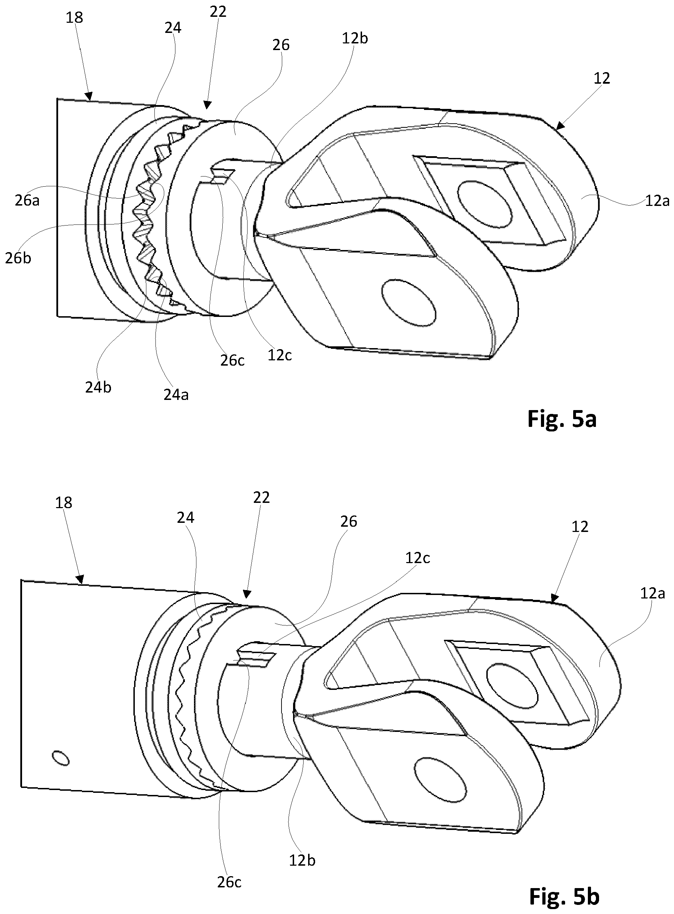

Das zweite Rastelement 26 weist einen zapfenförmigen Vorsprung 26c auf, der in eine Nut 12c der ersten Befestigungsvorrichtung 12 eingreift. Hierdurch ist das zweite Rastelement 26 drehfest mit der ersten Befestigungsvorrichtung 12 verbunden, wie dies am besten aus einer Zusammenschau der Fig. 5a und 5b zu ersehen ist. Bevorzugt können über den Umfang gesehen mehrere Vorsprünge 26c sowie mehrere entsprechend zugeordnete Nuten12c vorgesehen sein, um eine bessere und stabilere Kraftübertragung zu erzielen.

Das erste 24 und zweite Rastelement 26 sind in der Art einer Rastscheibe ausgebildet. Das erste Rastelement 24 weist Rastnasen 24a und Rastnuten 24b auf und das zweite Rastelement 26 weist gleich wie das erste Rastelement 24 ausgebildete Rastnasen 26a und Rastnuten 26b auf. Die Rastelemente 24 und 26 sind mit ihren Rastnasen 24a, 26a und Rastnuten 24b, 26b aufeinander zuweisend montiert. Dabei greifen die Rastnasen 24a des ersten Rastelements 24 in die Rastnuten 26b des zweiten Rastelements 26 und die Rastnasen 26a des zweiten Rastelements 26 in Rastnuten 24b des ersten Rastelements ein.

Die als Rastscheibe ausgebildeten Rastelemente 24, 26 weisen jeweils eine zentrale Öffnung auf, welche zur Aufnahme des Schaftes 12b der Befestigungsvorrichtung 12 oder des Schafts 14b der Befestigungsvorrichtung 14 dient.

Der Verdreh-Winkel und die Einstellmöglichkeiten zwischen den beiden Rastelementen 24, 26 hängt von der Größe derselben und von der Anzahl der Rastnasen 24a, 26a und Rastnuten 24b, 26b ab. Sind Rastscheiben mit einer größeren Zahl von Rastnasen 24a, 26a und Rastnuten 24b, 26b vorgesehen, kann eine feinere rastweise Verstellung erzielt werden als bei einer kleineren Zahl von Rastnasen 24a, 26a und Rastnuten 24b, 26b.

Unabhängig davon wäre es aber noch möglich, anstelle von Rastnuten die Rastelemente 24, 26 mit einem Reibbelag oder dgl. zu versehen, wodurch eine noch feinere Einstellung der Gesamtlänge der Zug-Druck-Stange 10 erfolgen kann. Mit einer Art Mikrostruktur an beiden einander zugewandten Oberflächen der Rastelemente 24, 26 kann dies ebenfalls erreicht werden.

Das erste Anschlussstück 18 umfasst einen Grundkörper 34 und eine Hülse 36. Die Hülse 36 umgreift die Rastelemente 24, 26 außen und ist auf der dem Grundkörper 34 zugewandten Ende mit dem Grundkörper 34 fest verbunden. Auf der dem Grundkörper 34 entfernt gelegenen Seite der Hülse 36 weist diese einen nach innen gerichteten, umlaufenden Flansch 36a auf, der auf der Innenseite eine Stützschulter 36b für das Federelement 28 bildet, siehe Fig. 7.

Das Federelement 28 der Rastvorrichtung 22 ist mit seinem ersten Ende 28a an der an der Hülse 36 des ersten Anschlussstücks 18 vorgesehenen Stützschulter 36b und mit seinem zweiten Ende 28b am zweiten Rastelement 26 abgestützt. Das Federelement 28, die Hülse 36, das erste und zweite Rastelement 24, 26 sind um den in das erste Anschlussstück 18 eingedrehten Schaft 12b der ersten Befestigungsvorrichtung 12 herum angeordnet. Das erste Rastelement 24 stützt sich seinerseits - da dieses mit dem Grundkörper 34 fest verbunden ist - an dem Grundkörper 34 des ersten Anschlussstücks 18 ab. Durch die Abstützung des Federelements 28 an der Stützschulter 36b und die dabei sich ergebende Federkraft auf die Rastelemente 24, 26 und auf den Grundkörper 34 und die Hülse 36 und somit auf das erste Anschlussstück 18, erfolgt eine radiale Drehsicherung über die Rastnasen 24a und Rastnuten 24b des Außengewindes 30a auf dem Schaft 12b und des Innengewindes 30b in dem ersten Anschlussstück 18. Die Hülse 36 ist in seitlichem Abstand zu den Rastelementen 24, 26 und dem Federelement 28 angeordnet, so dass diese sich beim Drehen der ersten Befestigungsvorrichtung 12 gegenüber dem ersten Anschlussstück 18 und in axialer Richtung gegen die Federkraft des Federelements 28 frei bewegen kann. Da auf der einen Seite der Grundkörper 34 und auf der anderen Seite die mit dem Grundkörper 34 verbundene Hülse 36 die Rastvorrichtung 22 mit dem Federelement 28 in axialer Richtung halten, wirkt immer die gleiche Haltekraft auf die Rastvorrichtung 22, unabhängig von der Ausfahrposition der ersten Befestigungsvorrichtung 12 gegenüber dem ersten Anschlussstück 18.

Die als Rastscheiben ausgebildeten Rastelemente 24, 26 sind jeweils für sich unabhängig drehfest an voneinander unterschiedlichen Bauteilen der Zug-Druck-Stange 10 angeordnet und zusätzlich durch das Federelement 28 gegeneinander verspannt. Das zweite Rastelement 26 ist in Axialrichtung gegen die Federkraft des Federelements 28 leicht verstellbar, wodurch das zweite Rastelement 26 bei Anliegen eines Drehmoments gegenüber dem ersten Rastelement 24 eine Drehbewegung der ersten Befestigungsvorrichtung 12 relativ zum ersten Anschlussstück 18 durchführen und diese in einer Mehrzahl von Drehstellungen mit einer vorbestimmten Verriegelungskraft lösbar arretieren kann. Die Verriegelungskraft entspricht dabei der Federkraft des Federelements 28, da die Rastnasen 24a, 26a aneinander gleiten, dabei das zweite Rastelement 26 axial verschieben, bis die Rastnasen 24a, 26a in die benachbarte Rastnut 24b, 26b eingreifen. Dies wiederholt sich, solange ein entsprechendes Drehmoment zwischen der Verbindungsstange 16 und dem ersten Befestigungselement 12 anliegt, also bis die gewünschte Einstellung der Zug-Druck-Stange 10 erreicht ist. Während der Drehung der ersten Befestigungsvorrichtung 12 dreht diese in das erste Anschlussstück 18 über die Gewindeanordnung 30 hinein oder hinaus, je nach Drehrichtung. Entsprechend dreht auch die zweite Befestigungsvorrichtung 14 in das zweite Anschlussstück 20 über die Gewindeanordnung 32 hinein oder hinaus.

Der zapfenförmige Vorsprung 26c des zweiten Rastelements 26 verfährt dabei entsprechend entlang in der Nut 12c des ersten Befestigungselements 12. Die Nut 12c ist dabei so lang ausgebildet wie der maximale Hub des ersten Befestigungselements 12 gegenüber dem ersten Anschlussstück 18 ist.

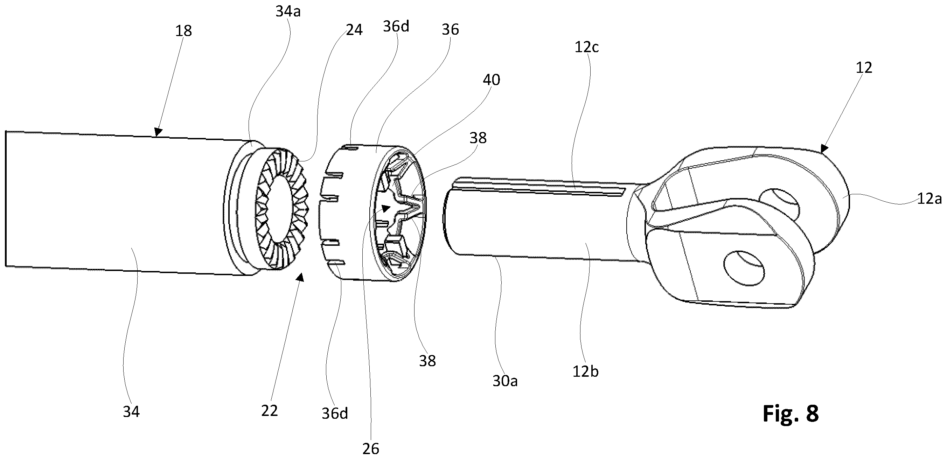

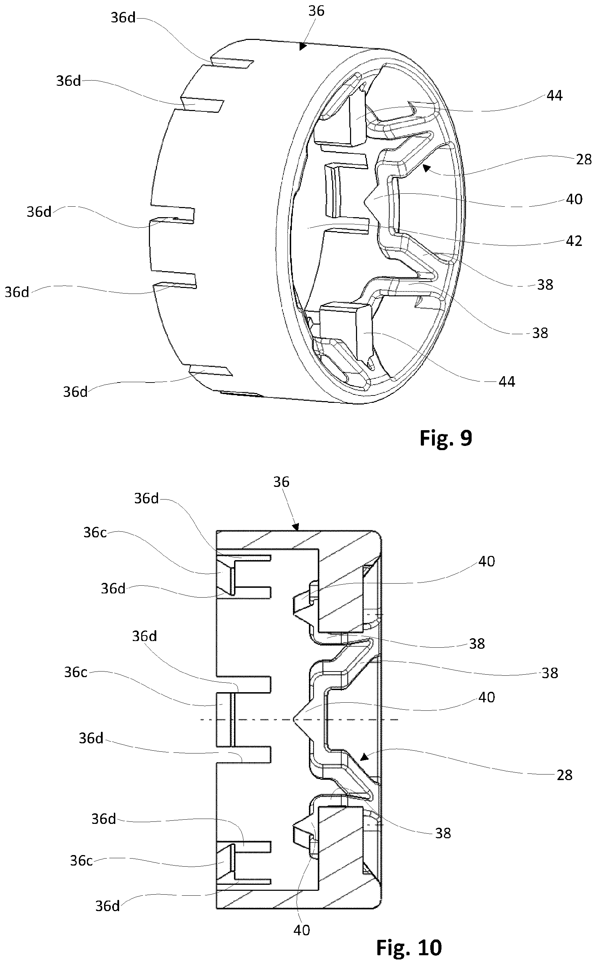

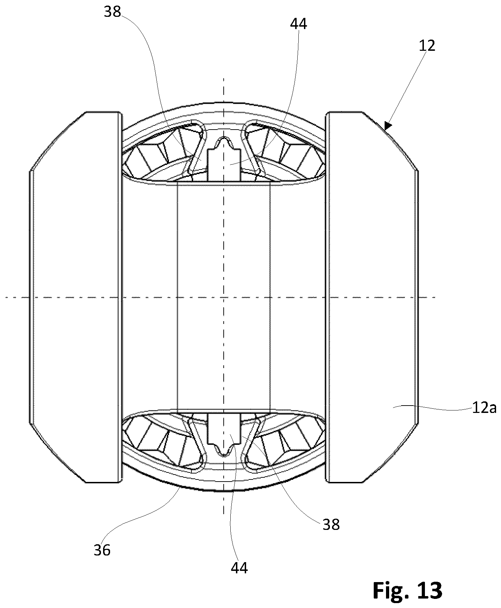

In den Fig. 8 bis 13 ist eine Ausführungsform der Zug-Druck-Stange 10 nach der Erfindung dargestellt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

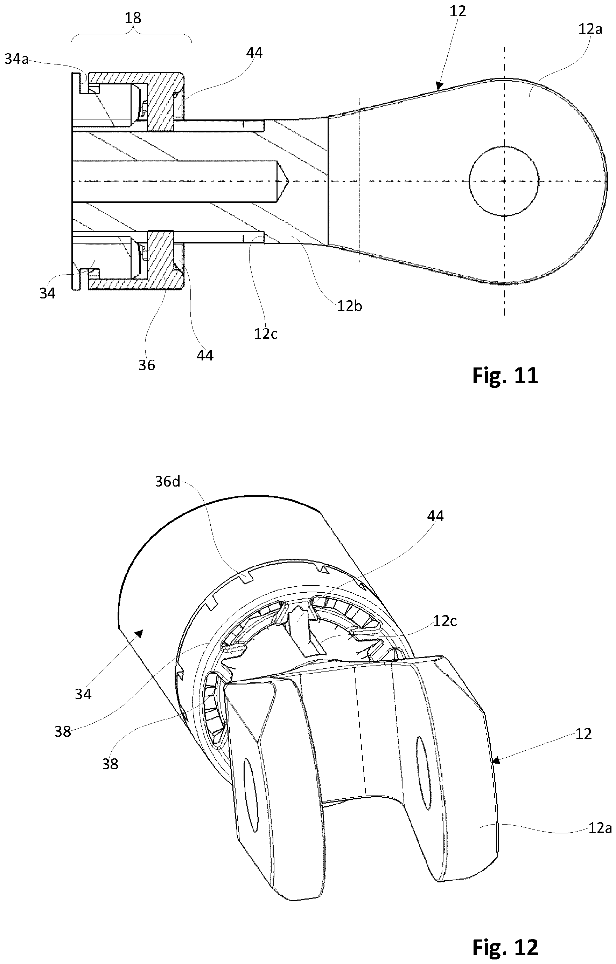

Der Grundkörper 34 des ersten Anschlussstücks 18 ist neben dem ersten Rastelement 24 mit einer Nut 34a versehen, siehe Fig. 8 und Fig. 11. Die Hülse 36 ist an ihrem dem Grundkörper 34 zugewandten Ende mit nach innen gerichteten Zapfen 36c und an beiden Seiten neben den Zapfen 36c vorgesehenen Schlitzen 36d versehen. Über die Zapfen 36c wird die Hülse 36 über das Rastelement 24 geschoben, bis die Zapfen 36c in die Nut 34a des Grundkörpers 34 einschnappen. Dadurch ist die Hülse 36 in axialer Richtung fixiert, jedoch gegenüber dem Grundkörper 34 drehbar gelagert.

Die erste Befestigungsvorrichtung 12 ist gegenüber dem ersten Ausführungsbeispiel unverändert ausgebildet.

Die Hülse 36 ist mit einem oder mehreren Federarmen 38 versehen, welche im Bereich des von dem Grundkörper 34 abgewandten Endes der Hülse 36 auf der Innenseite vorgesehen und nach innen gerichtet sind. Jeder Federarm 38 trägt eine Rastnase 40. Die Federarme 38 mit den Rastnasen 40 sind im Kreis angeordnet und bilden eine Durchgangsöffnung 42 für den Schaft 12b der ersten Befestigungsvorrichtung 12.

Zudem sind zwei Vorsprünge 44 zwischen zwei benachbart angeordneten Federarmen 38 vorgesehen, wobei die beiden Vorsprünge 44 um 180° zueinander versetzt angeordnet sind. Entsprechend sind die Nuten 12c im Schaft 12b ebenfalls um 180° versetzt angeordnet. Die Vorsprünge 44, die Federarme 38 und die Rastnasen 40 sind vorzugsweise materialeinheitlich einstückig aus Kunststoff ausgebildet und bilden eine Baueinheit. Auf einfache Weise kann diese Baueinheit durch Kunststoffspritzgießen hergestellt werden.

In beiden Ausführungsformen sind die Anschlussstücke 18 und 20 mit der Verbindungstange 16 fest verbunden, vorzugsweise verschraubt und/oder verklebt. Das Anschlussstück 18 weist die Rastvorrichtung 22 auf. Das Anschlussstück 20 weist keine derartige Haltevorrichtung auf. Insofern können die Anschlussstücke 18 und 20 unterschiedlich ausgebildet sein.

### Bezugszeichenliste

- 10: Zug-Druck-Stange
- 12: erste Befestigungsvorrichtung
- 12a: Kupplungselement
- 12b: Schaft
- 12c: Nut
- 14: zweite Befestigungsvorrichtung
- 14a: Kupplungselement
- 14b: Schaft
- 16: Verbindungstange
- 18: erstes Anschlussstück
- 20: zweites Anschlussstück
- 22: Rastvorrichtung
- 24: erstes Rastelement
- 24a: Rastnasen
- 24b: Rastnuten
- 26: zweites Rastelement
- 26a: Rastnasen
- 26b: Rastnuten
- 26c: zapfenförmiger Vorsprung
- 28: Federelement
- 28a: erstes Ende des Federelements 28
- 28b: zweites Ende des Federelements 28
- 30: Gewindeanordnung
- 30a: Gewindeanordnung - Teil des Schaftes 12b
- 30b: Gewindeanordnung - Teil des ersten Anschlussstücks 18
- 32: Gewindeanordnung
- 32a: Gewindeanordnung - Teil des Schaftes 14b
- 32b: Gewindeanordnung - Teil des zweiten Anschlussstücks 20
- 34: Grundkörper des ersten Anschlussstücks 18
- 34a: Nut
- 36: Hülse des ersten Anschlussstücks 18
- 36a: Flansch der Hülse 36
- 36b: Stützschulter der Hülse 36
- 36c: Zapfen der Hülse 36
- 36d: Schlitz der Hülse 36
- 38: Federarm
- 40: Rastnase
- 42: Durchgangsöffnung
- 44: Vorsprung

## Patentansprüche

1. Zug-Druck-Stange (10) umfassend zumindest eine erste Befestigungsvorrichtung (12) mit einem Kupplungselement (12a) und einem daran angeordneten Schaft (12b), zumindest ein erstes Anschlussstück (18), wobei die erste Befestigungsvorrichtung (12) zur Längenveränderung der Zug-Druck-Stange (10) über eine Gewindeanordnung (30) drehbar mit dem ersten Anschlussstück (18) verbunden ist, eine Haltevorrichtung mit in axialer Richtung gesehen jeweils einander zugewandten sowie zusammenwirkenden ersten und zweiten Halteelementen, welche mittels eines Federelements (28) aneinander gedrückt sind, wobei das erste Halteelement der Haltevorrichtung drehfest mit dem ersten Anschlussstück (18) verbunden ist und das zweite Halteelement drehfest an der ersten Befestigungsvorrichtung (12) angeordnet ist, wobei das Federelement (28) zwischen einem Bereich am ersten Anschlussstück (18) und einem Bereich am zweiten Halteelement wirksam ist und dabei die Halteelemente die Drehbewegung der ersten Befestigungsvorrichtung (12) relativ bezüglich dem ersten Anschlussstück (18) in einer Mehrzahl von Drehstellungen mit einer vorbestimmten Verriegelungskraft lösbar arretieren, wobei das erste Anschlussstück (18) einen Grundkörper (34) und eine die beiden Halteelemente und das Federelement (28) zumindest bereichsweise umgreifende Hülse (36) umfasst, mit der der Grundkörper (34) verbunden ist, wobei die Hülse (36) einen Innendurchmesser aufweist, der eine Relativbewegung der Halteelemente zueinander und des Federelements (28) gewährleistet, wobei die Hülse (36) gegenüber dem Grundkörper (34) zumindest in axialer Richtung fixiert ist, und wobei das erste Anschlussstück (18) die Haltevorrichtung mit dem Federelement (28) in beiden axialen Richtungen hält, die Haltevorrichtung als Rastvorrichtung (22) mit einem ersten Rastelement (24) und einem zweiten Rastelement (26) ausgebildet ist, wobei das zweite Rastelement (26) mehrere Rastnasen (26a) aufweist, welche in Rastnuten (24b) des ersten Rastelements (24) eingreifen, und das erste Rastelement (24) ebenfalls mehrere Rastnasen (24a) aufweist, welche in Rastnuten (26b) des zweiten Rastelements (26) eingreifen, **dadurch gekennzeichnet, dass** beim zweiten Rastelement (26) zumindest eine Rastnase (40) auf einem Federelement (28) fest angeordnet ist.

2. Zug-Druck-Stange nach Anspruch 1, **dadurch gekennzeichnet, dass** die Hülse (36) mit dem Federelement (28) oder mit mehreren Federelementen fest verbunden ist.

3. Zug-Druck-Stange nach Anspruch 1 oder 2, **dadurch gekennzeichnet, dass** die Hülse (36), das Federelement (28) und die Rastnasen (40) des zweiten Rastelements (26) eine Baueinheit bilden, die insbesondere einstückig ausgebildet ist.

4. Zug-Druck-Stange nach Anspruch 3
**dadurch gekennzeichnet, dass** die Baueinheit aus Kunststoff besteht.

5. Zug-Druck-Stange nach einem der vorangehenden Ansprüche, **dadurch gekennzeichnet, dass** die Federelemente (28) als Federarme (38) ausgebildet sind, welche von der Innenwandung der Hülse (36) nach innen auskragen und zumindest eine Rastnase (40) tragen.

6. Zug-Druck-Stange nach einem der vorangehenden Ansprüche, **dadurch gekennzeichnet, dass** der Schaft (12b) des ersten Befestigungselements eine Nut (12c) aufweist, die Hülse (36) zumindest einen, insbesondere radial, nach innen gerichteten in die Nut (12c) des Schafts (12b) eingreifenden Vorsprung aufweist, der im Zusammenwirken mit der Nut (12c) als Drehsicherung der Hülse (36) und des mit der Hülse (36) verbundenen zweiten Halteelements gegenüber dem Schaft (12b) dient.

7. Zug-Druck-Stange nach Anspruch 6, **dadurch gekennzeichnet, dass** die Nut (12c) parallel zur Längsachse des Schafts (12b) verläuft und zumindest so lang ausgebildet ist wie der maximale Hub, welcher über die Gewindeanordnung (30) zwischen erster Befestigungsvorrichtung (12) und erstem Anschlussstück (18) ermöglich wird.

8. Zug-Druck-Stange nach einem der vorangehenden Ansprüche, **dadurch gekennzeichnet, dass** die Hülse (36) den Schaft (12b) der ersten Befestigungsvorrichtung (12) umgreift, wobei der Schaft in dem Grundkörper (34) über die Gewindeanordnung (30) und über die Haltevorrichtung drehbar fixiert ist.

9. Zug-Druck-Stange nach einem der vorangehenden Ansprüche, **dadurch gekennzeichnet, dass** der Grundkörper (34) und die Hülse (36) lösbar oder unlösbar miteinander verbunden sind.

10. Zug-Druck-Stange nach einem der vorangehenden Ansprüche, **dadurch gekennzeichnet, dass** der Grundkörper (34) und die Hülse (36) über eine Schnappverbindung miteinander verbunden sind.

11. Zug-Druck-Stange nach einem der vorangehenden Ansprüche, **dadurch gekennzeichnet, dass** die Hülse (36) auf dem Grundkörper (34) drehbar gelagert ist.

12. Zug-Druck-Stange nach Anspruch 11, **dadurch gekennzeichnet, dass** das erste Anschlussstück am Außenumfang eine Nut (12c) aufweist, in welche die Hülse (36) bereichsweise eingreift.

13. Zug-Druck-Stange nach einem der vorangehenden Ansprüche, **dadurch gekennzeichnet, dass** eine zweite Befestigungsvorrichtung (14) mit Schaft (14b) und ein zweites Anschlussstück (20) vorgesehen sind.

14. Zug-Druck-Stange nach Anspruch 13, **dadurch gekennzeichnet, dass** die beiden Anschlussstücke (18, 20) über eine Verbindungsstange (16) miteinander fest verbunden sind.

15. Zug-Druck-Stange nach Anspruch 13 oder 14, **dadurch gekennzeichnet, dass** das erste und das zweite Anschlussstück (18, 20) unterschiedlich ausgebildet sind und nur das erste Anschlussstück (18) mit der Haltevorrichtung versehen ist.

16. Zug-Druck-Stange nach einem der Ansprüche 13 bis 15
**dadurch gekennzeichnet,**
**dass** das erste und zweite Anschlussstück (18, 20), insbesondere unmittelbar, in eine Verbindungsstange (16) eingebracht und mit dieser fest verbunden sind, insbesondere mit dieser verschraubt und/oder verklebt sind.

## Claims

1. Push/pull rod (10) comprising: at least one first fastening device (12) with a coupling element (12a) and with a shaft (12b) arranged on the latter, at least one first connecting piece (18), which first fastening device (12) is rotatably connected to the first connecting piece (18) via a threaded arrangement (30) so as to enable varying the length of the push/pull rod (10), a holding device with first and second holding elements which face one another when viewed in the axial direction and interact with one another, which holding elements are pressed against one another by means of a spring member (28), with the first holding element of the holding device being non-rotatably connected to the first connecting piece (18) and the second holding element thereof being non-rotatably arranged on the first fastening device (12), wherein the spring member (28) acts between a region on the first connecting piece (18) and a region on the second holding element, in which case the holding elements releasably lock the rotary movement of the first fastening device (12) relative to the first connecting piece (18) in a plurality of rotational positions with a predetermined locking force, which first connecting piece (18) comprises a main body (34) and a sleeve (36), which latter engages at least around part of the two holding elements and the spring member (28) and to which the main body (34) is connected, which sleeve (36) has an inner diameter that ensures relative movement of the holding elements with respect to one another and of the spring member (28), with the sleeve (36) being fixed with respect to the main body (34) at least in the axial direction, and the first connecting piece (18) holding the holding device with the spring member (28) in both axial directions, which holding device is designed as a latching device (22) having a first latching element (24) and a second latching element (26), with the second latching element (26) having a plurality of latching lugs (26a) which engage in latching grooves (24b) of the first latching element (24), and with the first latching element (24) likewise having a plurality of latching lugs (24a) which engage in latching grooves (26b) of the second latching element (26), **characterized in that**, in case of the second latching element (26), at least one latching lug (40) is firmly arranged on a spring member (28).

2. Push/pull rod according to claim 1, **characterized in that** the sleeve (36) is firmly connected to the spring member (28) or to plural spring members.

3. Push/pull rod according to claim 1 or claim 2, **characterized in that** the sleeve (36), the spring member (28) and the latching lugs (40) of the second latching element (26) form an integral unit which is, in particular, designed as a single piece.

4. Push/pull rod according to claim 3, **characterized in that** the integral unit is made of plastic.

5. Push/pull rod according to any one of the preceding claims, **characterized in that** the spring members (28) are designed as spring arms (38) which project inward from the inner wall of the sleeve (36) and carry at least one latching lug (40).

6. Push/pull rod according to any one of the preceding claims, **characterized in that** the shaft (12b) of the first fastening element has a groove (12c), the sleeve (36) has at least one projection which is in particular directed radially inward and which engages in the groove (12c) of the shaft (12b) and which, in cooperation with the groove (12c), serves to prevent the sleeve (36) and the second holding element connected to the sleeve (36) from rotating relative to the shaft (12b).

7. Push/pull rod of claim 6, **characterized in that** the groove (12c) extends parallel to the longitudinal axis of the shaft (12b) and is at least as long as the maximum stroke made possible by the threaded arrangement (30) between the first fastening device (12) and the first connecting piece (18).

8. Push/pull rod according to any one of the preceding claims, **characterized in that** the sleeve (36) engages around the shaft (12b) of the first fastening device (12), which shaft is rotatably fixed in the main body (34) via the threaded arrangement (30) and via the holding device.

9. Push/pull rod according to any one of the preceding claims, **characterized in that** the main body (34) and the sleeve (36) are releasably or permanently connected to one another.

10. Push/pull rod according to any one of the preceding claims, **characterized in that** the main body (34) and the sleeve (36) are connected to one another by means of a snap connection.

11. Push/pull rod according to any one of the preceding claims, **characterized in that** the sleeve (36) is rotatably mounted on the main body (34).

12. Push/pull rod according to claim 11, **characterized in that** a groove (12c) is provided on the outer circumference of the first connecting piece, in which part of the sleeve (36) engages.

13. Push/pull rod according to any one of the preceding claims, **characterized in that** a second fastening device (14) having a shaft (14b) and a second connecting piece (20) are provided.

14. Push/pull rod according to claim 13, **characterized in that** the two connecting pieces (18, 20) are firmly connected to one another via a connecting rod (16).

15. Push/pull rod according to claim 13 or claim 14, **characterized in that** the first and second connecting pieces (18, 20) are of a different design each, and that only the first connecting piece (18) is provided with the holding device.

16. Push/pull rod according to one of claims 13 to 15 above, **characterized in that** the first and second connecting pieces (18, 20) are inserted, in particular directly, into a connecting rod (16) and are firmly connected to the latter, in particular they are screwed and/or glued to the latter.

## Revendications

1. Barre de traction-compression (10) comprenant au moins un premier dispositif de fixation (12) avec un élément d'accouplement (12a) et une tige (12b) disposée sur celui-ci, au moins une première pièce de raccordement (18), dans laquelle le premier dispositif de fixation (12) pour modifier la longueur de la barre de traction-compression (10) est relié de manière rotative à la première pièce de raccordement (18) par l'intermédiaire d'un ensemble fileté (30), un dispositif de retenue avec des premier et deuxième éléments de retenue respectivement tournés l'un vers l'autre vu dans la direction axiale ainsi qu'en coopération, lesquels sont pressés l'un sur l'autre au moyen d'un élément ressort (28), dans laquelle le premier élément de retenue du dispositif de retenue est relié de manière solidaire en rotation à la première pièce de raccordement (18) et le deuxième élément de retenue est disposé de manière solidaire en rotation sur le premier dispositif de fixation (12), dans laquelle l'élément ressort (28) est actif entre une zone sur la première pièce de raccordement (18) et une zone sur le deuxième élément de retenue et ainsi les éléments de retenue bloquent de manière libérable le mouvement rotatif du premier dispositif de fixation (12) par rapport à la première pièce de raccordement (18) dans une pluralité de positions de rotation avec une force de verrouillage prédéfinie, dans laquelle la première pièce de raccordement (18) comprend un corps de base (34) et un manchon (36) entourant au moins par endroits les deux éléments de retenue et l'élément ressort (28), auquel le corps de base (34) est relié, dans laquelle le manchon (36) présente un diamètre intérieur, qui garantit un mouvement relatif des éléments de retenue l'un par rapport à l'autre et de l'élément ressort (28), dans laquelle le manchon (36) est fixé par rapport au corps de base (34) au moins dans la direction axiale, et dans laquelle la première pièce de raccordement (18) retient le dispositif de retenue avec l'élément ressort (28) dans les deux directions axiales, le dispositif de retenue est réalisé sous la forme d'un dispositif d'encliquetage (22) avec un premier élément d'encliquetage (24) et un deuxième élément d'encliquetage (26), dans laquelle le deuxième élément d'encliquetage (26) présente plusieurs becs d'encliquetage (26a), lesquels s'insèrent dans des rainures d'encliquetage (24b) du premier élément d'encliquetage (24), et le premier élément d'encliquetage (24) présente également plusieurs becs d'encliquetage (24a), lesquels s'insèrent dans des rainures d'encliquetage (26b) du deuxième élément d'encliquetage (26), **caractérisée en ce que** pour le deuxième élément d'encliquetage (26) au moins un bec d'encliquetage (40) est disposé fixement sur un élément ressort (28).

2. Barre de traction-compression selon la revendication 1, **caractérisée en ce que** le manchon (36) est relié fixement à l'élément ressort (28) ou à plusieurs éléments ressorts.

3. Barre de traction-compression selon la revendication 1 ou 2, **caractérisée en ce que** le manchon (36), l'élément ressort (28) et les becs d'encliquetage (40) du deuxième élément d'encliquetage (26) forment une unité modulaire, qui est en particulier réalisée d'une seule pièce.

4. Barre de traction-compression selon la revendication 3, **caractérisée en ce que** l'unité modulaire est constituée de matière plastique.

5. Barre de traction-compression selon l'une quelconque des revendications précédentes, **caractérisée en ce que** les éléments ressorts (28) sont réalisés sous la forme de bras ressorts (38), lesquels font saillie vers l'intérieur à partir de la paroi intérieure du manchon (36) et portent au moins un bec d'encliquetage (40).

6. Barre de traction-compression selon l'une quelconque des revendications précédentes, **caractérisée en ce que** la tige (12b) du premier élément de fixation présente une rainure (12c), le manchon (36) présente au moins une partie saillante dirigée vers l'intérieur, en particulier radialement, s'insérant dans la rainure (12c) de la tige (12b), qui en coopération avec la rainure (12c) sert de blocage en rotation du manchon (36) et du deuxième élément de retenue relié au manchon (36) par rapport à la tige (12b).

7. Barre de traction-compression selon la revendication 6, **caractérisée en ce que** la rainure (12c) s'étend parallèlement à l'axe longitudinal de la tige (12b) et est réalisé de manière au moins aussi longue que la course maximale, laquelle est permise par l'intermédiaire de l'ensemble fileté (30) entre le premier dispositif de fixation (12) et la première pièce de raccordement (18).

8. Barre de traction-compression selon l'une quelconque des revendications précédentes, **caractérisée en ce que** le manchon (36) entoure la tige (12b) du premier dispositif de fixation (12), dans laquelle la tige est fixée de manière rotative dans le corps de base (34) par l'intermédiaire de l'ensemble fileté (30) et par l'intermédiaire du dispositif de retenue.

9. Barre de traction-compression selon l'une quelconque des revendications précédentes, **caractérisée en ce que** le corps de base (34) et le manchon (36) sont reliés l'un à l'autre de manière libérable ou non libérable.

10. Barre de traction-compression selon l'une quelconque des revendications précédentes, **caractérisée en ce que** le corps de base (34) et le manchon (36) sont reliés l'un à l'autre par l'intermédiaire d'une liaison par encliquetage.

11. Barre de traction-compression selon l'une quelconque des revendications précédentes, **caractérisée en ce que** le manchon (36) est monté sur le corps de base (34) de manière rotative.

12. Barre de traction-compression selon la revendication 11, **caractérisée en ce que** la première pièce de raccordement présente sur la périphérie extérieure une rainure (12c), dans laquelle le manchon (36) s'insère par endroits.

13. Barre de traction-compression selon l'une quelconque des revendications précédentes, **caractérisée en ce qu'**un deuxième dispositif de fixation (14) avec une tige (14b) et une deuxième pièce de raccordement (20) sont prévus.

14. Barre de traction-compression selon la revendication 13, **caractérisée en ce que** les deux pièces de raccordement (18, 20) sont reliées fixement l'une à l'autre par l'intermédiaire d'une barre de liaison (16).

15. Barre de traction-compression selon la revendication 13 ou 14, **caractérisée en ce que** la première et la deuxième pièce de raccordement (18, 20) sont réalisées de manière différente et seule la première pièce de raccordement (18) est pourvue du dispositif de retenue.

16. Barre de traction-compression selon l'une quelconque des revendications 13 à 15, **caractérisée en ce que** les première et deuxième pièces de raccordement (18, 20) sont introduites, en particulier directement, dans une barre de liaison (16) et reliées fixement à celle-ci, en particulier vissées et/ou collées avec celle-ci.
